# EUROPÄISCHE PATENTANMELDUNG

(11) **EP 1 428 767 A1**
(43) Veröffentlichungstag der Anmeldung: **16.06.2004**
(21) Anmeldenummer: 02406095.6
(22) Anmeldetag: 12.12.2002
(51) Int. Cl.: B65D 75/54, B65D 75/26, B65D 33/00, B65D 65/40, B65B 11/50

(54) **Verpackungsbeutel**

(71) Anmelder: Alcan Technology & Management Ltd., 8212 Neuhausen am Rheinfall (CH)
(72) Erfinder: Wittemer, Joseph, Louisville, K.Y. 40299 (US)

(57) **Zusammenfassung**

Bei einem Verpackungsbeutel (10) mit einer Vorderwand (12) und einer Rückwand (14) aus einer Verpackungsfolie (16,16a,b) sind die Vorderwand (12) und die Rückwand (14) längs eines umlaufenden Randes (18) miteinander verbunden. Die Vorderwand (12) und/oder die Rückwand (14) ist auf der Beutelaussenseite bedruckt und mit einer ein- oder beidseitig bedruckten, im wesentlichen mit ihrer gesamten Fläche an der Vorderwand (12) bzw. Rückwand (14) haftenden und von dieser lösbaren (peelbaren) Deckfolie (20a,b) verbunden. Die Deckfolien (20a,b) sind in einem Randbereich (24a,b) mit der Verpackungsfolie (16,16a,b) permanent verbunden. Mit der Anordnung von Deckfolien (20a,b) erhöht sich die Zahl der bedruckbaren Seiten von ursprünglich zwei auf maximal sechs, wenn auf beiden Beutelseiten je eine Deckfolie (20a,b) angeordnet ist und neben der auf der Vorder- und Rückseite des Beutels (10) bedruckten Verpackungsfolie (16,16a,16b) auch beide seiten der Deckfolien (20a,b) bedruckt sind.

## Beschreibung

Die Erfindung betrifft einen Verpackungsbeutel mit einer Vorderwand und einer Rückwand aus einer Verpackungsfolie, wobei die Vorderwand und die Rückwand längs eines umlaufenden Randes miteinander verbunden sind und die Vorderwand und/oder die Rückwand auf der Beutelaussenseite bedruckt ist. Die Erfindung betrifft weiter ein Verfahren zur Herstellung derartiger Verpakkungsbeutel.

Verpackungsbeutel der vorstehend bezeichneten Art werden u.a. zur Verpakkung von Medikamenten in der Form von Tabletten oder Pulver verwendet. Üblicherweise sind beide Seiten eines Beutels mit an den Konsumenten gerichteten Informationen bedruckt. Die von Gesundheits- und Arzneimittelbehörden zum Aufdruck auf Medikamentenverpackungen vorgeschriebenen Informationen nehmen laufend zu. Bei kleinen Verpackungen ist deshalb die bedruckbare Fläche oft nicht ausreichend, um alle Informationen in lesbarer Schriftgrösse auf der Verpackung anzubringen.

Zur Vergrösserung der bedruckbaren Fläche bietet sich als naheliegende Lösung die Vergrösserung der Verpackung an. Ein grösserer Beutel hat jedoch neben höheren Materialkosten neue Werkzeuge und weitere Änderungen an einer bestehenden Abpacklinie zur Folge.

Der Erfindung liegt die Aufgabe zugrunde, bei einem Verpackungsbeutel der eingangs genannten Art bei gleichbleibenden Beutelabmessungen die bedruckbare Fläche zu vergrössern.

Ein weiteres Ziel der Erfindung ist die Bereitstellung eines zur Herstellung der Verpackungsbeutel geeigneten Verfahrens.

Zur erfindungsgemässen Lösung der Aufgabe bezüglich des Verpackungsbeutels führt, dass die Vorderwand und/oder die Rückwand auf der Beutelaussenseite mit einer ein- oder beidseitig bedruckten, im wesentlichen mit ihrer gesamten Fläche an der Vorderwand bzw. Rückwand haftenden und von dieser lösbaren (peelbaren) Deckfolie verbunden ist.

Mit der erfindungsgemässen Anordnung von Deckfolien erhöht sich die Zahl der bedruckbaren Seiten von ursprünglich zwei auf maximal sechs, wenn auf beiden Beutelseiten je eine Deckfolie angeordnet ist und neben der auf der Vorderund Rückseite des Beutels bedruckten Verpackungsfolie auch beide Seiten der Deckfolien bedruckt sind.

Da die Deckfolie im wesentlichen mit ihrer gesamten Fläche an der Verpakkungsfolie haftet und demzufolge zusammen mit der Verpackungsfolie eine Verbundfolie bildet, kann die mit der Deckfolie verbundene Verpackungsfolie auf gleiche Weise und ohne wesentliche Maschineneinstellungen an der Abpacklinie wie eine herkömmliche Verpackungsfolie zu Verpackungsbeuteln verarbeitet werden.

Der erfindungsgemässe Verpackungsbeutel kann so aufgebaut sein, dass die Vorderwand aus einer ersten Verpackungsfolie und die Rückwand aus einer zweiten Verpackungsfolie besteht. Je nach Bedarf kann die Deckfolie auf einer oder auf beiden Verpackungsfolien angeordnet sein.

Bei einer anderen Ausführungsform des erfindungsgemässen Verpackungsbeutels besteht die Vorderwand und die Rückwand aus derselben gefalteten und mit der Deckschicht verbundenen Verpackungsfolie.

Zweckmässigerweise ist die Deckfolie in einem Randbereich mit der Verpakkungsfolie permanent verbunden.

Ein erstes zur Herstellung der erfindungsgemässen Verpackungsbeutel geeignetes Verfahren zeichnet sich durch die folgenden Schritte aus:
A. Ein- oder beidseitiges Bedrucken einer ersten Deckfolienbahn,
B. Beschichten einer Seite der ersten Deckfolienbahn mit einer ersten Kunststoffschicht,
C. Zusammenführen der ersten Deckfolienbahn über die erste Kunststoffschicht mit der bedruckten Seite einer ersten Verpackungsfolienbahn unter Bildung einer lösbaren (peelbaren) Verbindung,
D. Zusammenführen der mit der ersten Deckfolienbahn verbundenen ersten Verpackungsfolienbahn mit einer zweiten Verpackungsfolienbahn,
E. Verbinden der ersten Verpackungsfolienbahn mit der zweiten Verpakkungsfolienbahn längs umlaufender Ränder.

Ein zweites zur Herstellung der erfindungsgemässen Verpackungsbeutel geeignetes Verfahren zeichnet sich durch die folgenden Schritte aus:
A. Ein- oder beidseitiges Bedrucken einer ersten Deckfolienbahn,
B. Beschichten einer Seite der ersten Deckfolienbahn mit einer ersten Kunststoffschicht,
C. Zusammenführen der ersten Deckfolienbahn über die erste Kunststoffschicht mit der bedruckten Seite einer ersten Verpackungsfolienbahn unter Bildung einer lösbaren (peelbaren) Verbindung,
D. Ein- oder beidseitiges Bedrucken einer zweiten Deckfolienbahn,
E. Beschichten einer Seite der zweiten Deckfolienbahn mit einer zweiten Kunststoffschicht,
F. Zusammenführen der zweiten Deckfolienbahn über die zweite Kunststoffschicht mit der bedruckten Seite einer zweiten Verpackungsfolienbahn unter Bildung einer lösbaren (peelbaren) Verbindung,
G. Zusammenführen der mit der ersten Deckfolienbahn verbundenen ersten Verpackungsfolienbahn mit der mit der zweiten Deckfolienbahn verbundenen zweiten Verpackungsfolienbahn,
H. Verbinden der ersten Verpackungsfolienbahn mit der zweiten Verpakkungsfolienbahn längs umlaufender Ränder.

Ein drittes zur Herstellung der erfindungsgemässen Verpackungsbeutel geeignetes Verfahren zeichnet sich durch die folgenden Schritte aus:
A. Ein- oder beidseitiges Bedrucken einer Deckfolienbahn,
B. Beschichten einer Seite der Deckfolienbahn mit einer Kunststoffschicht,
C. Zusammenführen der Deckfolienbahn über die Kunststoffschicht mit der bedruckten Seite einer Verpackungsfolienbahn unter Bildung einer lösbaren (peelbaren) Verbindung,
D. Falten der mit der Deckfolienbahn verbundenen Verpackungsfolienbahn in Bahnlaufrichtung,
E. Verbinden der gefalteten Verpackungsfolienbahn mit sich selbst längs umlaufender Ränder.

Als Verpackungs- und Deckfolien können im wesentlichen alle bekannten Verpackungsmaterialien verwendet werden. Die Verpackungsmaterialien sollen für den Einsatz auf Verpackungsmaschinen geeignet sein. Geeignet sind beispielsweise ein- oder mehrschichtige Folien aus Kunststoffen oder aus Papier, gegebenenfalls mit Sperrschichten, sowie ein- oder beidseitig mit Papier oder Metallfolien beschichtete Kunststofffolien.

Als Kunststoffe können beispielsweise Polyolefine, wie Polyethylene oder Polypropylene, Polyamide, Polyvinylchlorid oder Polyester als Monofolie oder als Folienverbund oder unter Verwendung verschiedener Kunststoffe im Verbund als mehrschichtige Folienverbunde verwendet werden. Zwischen wenigstens zwei Schichten können z.B. metallische oder keramische Sperrschichten angeordnet sein.

Kunststofffilme können transparent, durchscheinend oder opak sein. Sie können durch Extrusion, als Film oder als Lack auf eine weitere Folie oder auf Papier aufgetragen werden.

Die Verpackungsfolien sind bevorzugt auf der beim daraus hergestellten Beutel nach innen gerichteten Seite mit einer Siegelschicht, beispielsweise mit einem Siegellack oder einer Siegelfolie aus z.B. Polyolefinen, wie Polyethylenen, beschichtet.

Die peelbare Verbindung zwischen Verpackungs- und Deckfolie kann z.B. in bekannter Art durch eine Kaltsiegelung geeigneter Beschichtungswerkstoffe oder mit einem Permanentkleber mit verminderter Klebkraft auf der Basis von Polyurethan erzeugt werden.

Als Permanentklebstoff zur Verbindung der Deckfolien mit der Verpackungsfolie im Randbereich der Beutel eignen sich beispielsweise Klebstoffe auf der Basis von Polyurethan.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- - Fig. 1: die Draufsicht auf die Vorderseite eines Verpackungsbeutels;
- - Fig. 2: einen Schnitt durch den Verpackungsbeutel von Fig. 1 nach deren Linie I-I;
- - Fig. 3: den Schnitt von Fig. 2 mit gelösten Deckfolien;
- - Fig. 4: ein vergrössertes Detail von Fig. 3;
- - Fig. 5: eine Schrägsicht auf den Verpackungsbeutel von Fig. 1 mit gelösten Deckfolien;
- - Fig. 6: einen Längsschnitt durch eine erste Anordnung von Folienbahnen zur Herstellung von Verpackungsbeuteln;
- - Fig. 7: die Draufsicht auf die durch Verbinden der Verpackungsfolienbahnen von Fig. 6 gebildeten Verpackungsbeutel;
- - Fig. 8: einen Längsschnitt durch eine zweite Anordnung von Folienbahnen zur Herstellung von Verpackungsbeuteln;
- - Fig. 9: die Draufsicht auf die miteinander verbundenen Folienbahnen von Fig. 8;
- - Fig. 10: die Draufsicht auf die durch Falten der miteinander verbundenen Folienbahnen von Fig. 9 gebildeten Verpackungsbeutel.

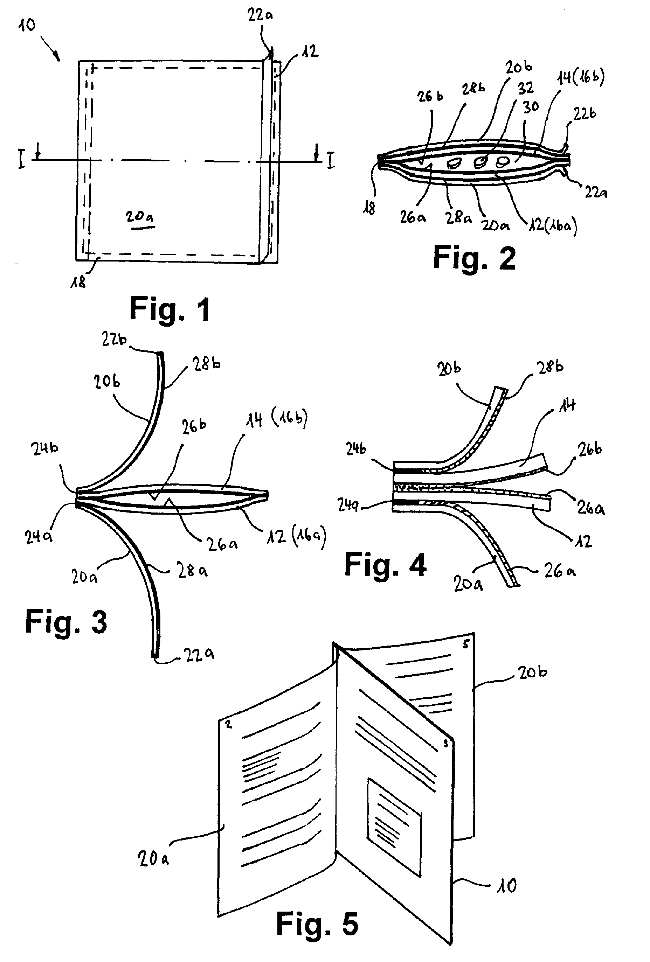

Ein in den Fig. 1 und 2 gezeigter Verpackungsbeutel 10 von quadratischer Form mit einer Seitenlänge von beispielsweise 70 mm weist eine Vorderwand 12 aus einer ersten Verpackungsfolie 16a und eine Rückwand 14 aus einer zweiten Verpackungsfolie 16b auf. Die Vorderwand 12 und die Rückwand 14 weisen eine siegelfähige Innenbeschichtung 26a, b auf, sind längs eines umlaufenden Randes 18 durch eine Siegelung miteinander verbunden und begrenzen einen Beutelinnenraum 30 mit Füllgut 32 in der Form von Tabletten.

Die Vorderwand 12 des Verpackungsbeutels 10 ist über eine peelbare Klebstoffschicht 28a mit einer ersten Deckfolie 20a verbunden. In gleicher Weise ist die Rückwand 14 über eine peelbare Klebstoffschicht 28b mit einer zweiten Deckfolie 20b verbunden. Mit Ausnahme einer in einem Randbereich angeordneten Greiflasche 22a, b haften die beiden Deckfolien 20a, b mittels der peelbaren Klebstoffschicht 28a, b mit ihrer gesamten Fläche an der Verpackungsfolie 16a, b. Die Deckfolien 20 a, b sind an ihrem der Greiflasche 22a, b entfernten Ende am Beutelrand über einen Randstreifen 24a, b aus einem Permanentkleber mit der darunterliegenden Verpackungsfolie 16a, b fest verbunden. Wie in den Fig. 3 und 4 dargestellt, lassen sich die Deckfolien 20a, b beim Ziehen an den Greiflaschen 22a, b von der Vorderwand 12 bzw. Rückwand 14 des Verpackungsbeutels 10 bis zum Randstreifen 24a, b lösen, ohne vom Beutel abgetrennt zu werden.

Wie insbesondere aus Fig. 5 hervorgeht, entstehen beim Abziehen der Deckfolien 20a, b von der Vorderwand 12 bzw. der Rückwand 14 des Verpackungsbeutels 10 insgesamt sechs in der Art eines Buches gebundene Seiten, nämlich die Vorder- und Rückseite der ersten Deckfolie 20a, die Aussenseiten der Vorderwand 12 und der Rückwand 14 des Verpackungsbeutels 10 sowie die Vorder- und Rückseite der zweiten Deckfolie 20b. Jede dieser Seiten kann bedruckt sein.

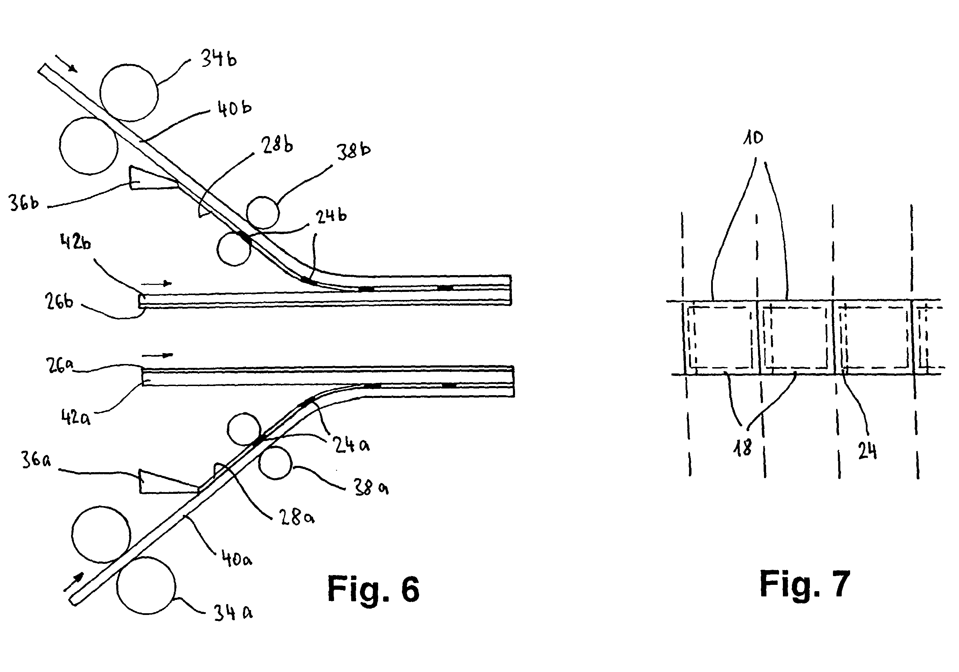

Die Herstellung von allseitig bedruckten Verpackungsbeuteln 10 wird nachfolgend anhand der Fig. 6 bis 10 erläutert.

Bei einem in den Fig. 6 und 7 dargestellten ersten Verfahren wird eine erste Deckfolienbahn 40a in einer Druckstation 34a beidseitig bedruckt, in einer Beschichtungsstation 36a einseitig mit dem peelbaren Klebstoff 28a beschichtet und in einer Auftragsstation 38a nach einem den Randstreifen 24a entsprechenden Muster mit Permanentkleber beschichtet. Die derart beschichtete erste Deckfolienbahn 40a wird über die peelbare Klebstoffschicht 28a mit einer beidseitig bedruckten und eine siegelfähige Innenbeschichtung 26a aufweisenden ersten Verpackungsfolienbahn 42a verbunden.

In gleicher Weise wird eine zweite Deckfolienbahn 40b in einer Druckstation 34b beidseitig bedruckt, in einer Beschichtungsstation 36b einseitig mit dem peelbaren Klebstoff 28b beschichtet und in einer Auftragsstation 38b nach einem den Randstreifen 24b entsprechenden Muster mit Permanentkleber beschichtet. Die derart beschichtete zweite Deckfolienbahn 40b wird über die peelbare Klebstoffschicht 28b mit einer beidseitig bedruckten und eine siegelfähige Innenbeschichtung 26b aufweisenden zweiten Verpackungsfolienbahn 42b verbunden.

Die beiden mit je einer Deckfolienbahn 40a, b verbundenen Verpackungsfolienbahnen 42a, b laufen in einer Abpackmaschine aufeinander zu. Nach der Zuführung von Füllgut erfolgt die Weiterverarbeitung der beschichteten Verpakkungsfolienbahnen 40a, b durch eine Siegelung längs umlaufender Ränder 18 und Vereinzelung der gebildeten Verpackungsbeutel 10.

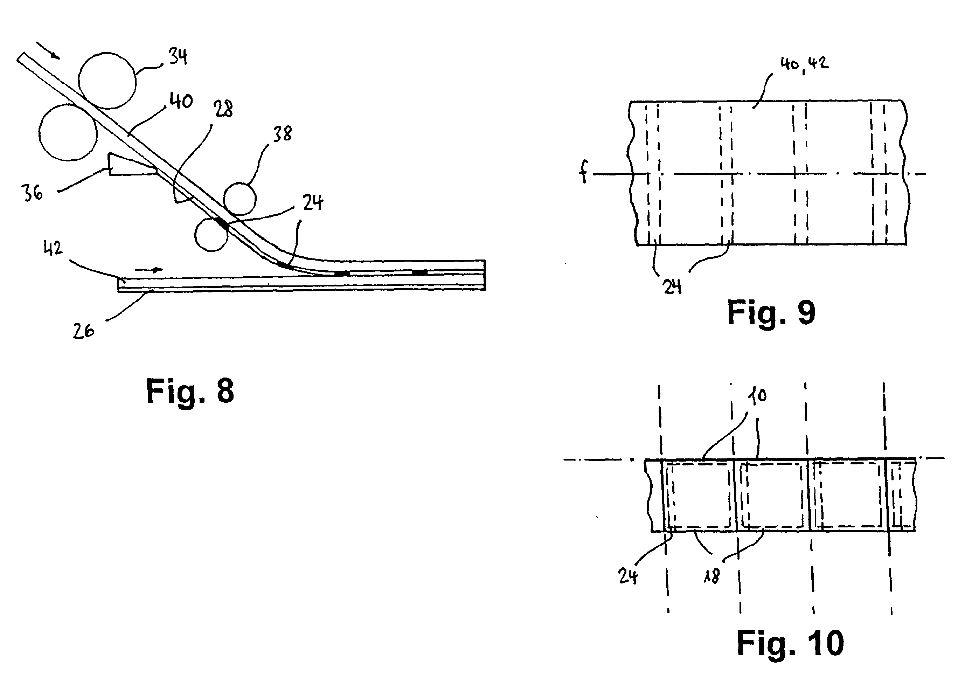

Bei einem in den Fig. 8 bis 10 dargestellten zweiten Verfahren wird eine Deckfolienbahn 20 in einer Druckstation 34 beidseitig bedruckt, in einer Beschichtungsstation 36 einseitig mit dem peelbaren Klebstoff 28 beschichtet und in einer Auftragsstation 38 nach einem den Randstreifen 24 entsprechenden Muster mit Permanentkleber beschichtet. Die derart beschichtete Deckfolienbahn 40 wird über die peelbare Klebstoffschicht 28 mit einer beidseitig bedruckten und eine siegelfähige Innenbeschichtung 26 aufweisenden Verpackungsfolienbahn 42 verbunden. Die Breite der Verpackungsfolienbahn 42 entspricht der doppelten Seitenlänge eines Verpackungsbeutels 10.

Die Verpackungsfolienbahn 42 wird in einer Abpackmaschine um eine in Bahnlaufrichtung in der Mitte der Verpackungsfolienbahn 42 verlaufende Faltachse f gefaltet. Nach der Zuführung von Füllgut erfolgt die Weiterverarbeitung der beschichteten Verpackungsfolienbahn 42 durch eine Siegelung längs umlaufender Ränder 18 und Vereinzelung der gebildeten Verpackungsbeutel 10.

Es versteht sich von selbst, dass sämtliche Bedruckungen der Deckfolienbahnen 40, 40a,b und der Verpackungsfolienbahnen 42, 42a,b und auch das Auftragen der Permanentklebermuster 24, 24a,b im Registerdruckverfahren durchgeführt werden müssen. Das exakte Zusammenführen der einzelnen Folienbahnen erfordert ebenfalls eine Steuerung über Druckmarken.

## Patentansprüche

1. Verpackungsbeutel mit einer Vorderwand (12) und einer Rückwand (14) aus einer Verpackungsfolie (16, 16a,b), wobei die Vorderwand (12) und die Rückwand (14) längs eines umlaufenden Randes (18) miteinander verbunden sind und die Vorderwand (12) und/oder die Rückwand (14) auf der Beutelaussenseite bedruckt ist,
**dadurch gekennzeichnet, dass**
die Vorderwand (12) und/oder die Rückwand (14) auf der Beutelaussenseite mit einer ein- oder beidseitig bedruckten, im wesentlichen mit ihrer gesamten Fläche an der Vorderwand (12) bzw. Rückwand (14) haftenden und von dieser lösbaren (peelbaren) Deckfolie (20, 20a,b) verbunden ist.

2. Verpackungsbeutel nach Anspruch 1, **dadurch gekennzeichnet, dass** die Vorderwand (12) aus einer ersten Verpackungsfolie (16a) und die Rückwand (14) aus einer zweiten Verpackungsfolie (16b) besteht und wenigstens eine der Verpackungsfolien (16a,b) mit einer Deckfolie (20a, b) verbunden ist.

3. Verpackungsbeutel nach Anspruch 1, **dadurch gekennzeichnet, dass** die Vorderwand (12) und die Rückwand (14) aus derselben gefalteten und mit der Deckfolie (20 verbunden Verpackungsfolie (16) besteht.

4. Verpackungsbeutel nach einem der Ansprüche 1 bis 3, **dadurch gekennzeichnet, dass** die Deckfolie (20, 20a,b) in einem Randbereich (24, 24a,b) mit der Verpackungsfolie (16, 16a,b) permanent verbunden ist.

5. Verfahren zur Herstellung von Verpackungsbeuteln (10) mit einer Vorderwand (12) und einer Rückwand (14) aus einer Verpackungsfolie (16a,b), wobei die Vorderwand (12) und die Rückwand (14) längs eines umlaufenden Randes (18) miteinander verbunden sind, die Vorderwand (12) und/oder die Rückwand (14) auf der Beutelaussenseite bedruckt und auf der Beutelaussenseite mit einer ein- oder beidseitig bedruckten, im wesentlichen mit ihrer gesamten Fläche an der Vorderwand (12) bzw. Rückwand (14) haftenden und von dieser lösbaren (peelbaren) Deckfolie (20a) verbunden ist, welches Verfahren die folgenden Schritte aufweist:
A. Ein- oder beidseitiges Bedrucken einer Deckfolienbahn (40a),
B. Beschichten einer Seite der Deckfolienbahn (40a) mit einer peelbaren Kunststoffschicht (28a),
C. Zusammenführen der Deckfolienbahn (40a) über die peelbare Kunststoffschicht (28a) mit der bedruckten Seite einer ersten Verpackungsfolienbahn (42a) unter Bildung einer lösbaren (peelbaren) Verbindung,
D. Zusammenführen der mit der Deckfolienbahn (40a) verbundenen ersten Verpackungsfolienbahn (42a) mit einer zweiten Verpackungsfolienbahn (42b),
E. Verbinden der ersten Verpackungsfolienbahn (42a) mit der zweiten Verpackungsfolienbahn (42b) längs umlaufender Ränder (18).

6. Verfahren zur Herstellung von Verpackungsbeuteln (10) mit einer Vorderwand (12) und einer Rückwand (14) aus einer Verpackungsfolie (16a,b), wobei die Vorderwand (12) und die Rückwand (14) längs eines umlaufenden Randes (18) miteinander verbunden sind, die Vorderwand (12) und/oder die Rückwand (14) auf der Beutelaussenseite bedruckt und auf der Beutelaussenseite mit einer ein- oder beidseitig bedruckten, im wesentlichen mit ihrer gesamten Fläche an der Vorderwand (12) bzw. Rückwand (14) haftenden und von dieser lösbaren (peelbaren) Deckfolie (20a,b) verbunden ist, welches Verfahren die folgenden Schritte aufweist:
A. Ein- oder beidseitiges Bedrucken einer ersten Deckfolienbahn (40a),
B. Beschichten einer Seite der ersten Deckfolienbahn (40a) mit einer ersten peelbaren Kunststoffschicht (28a),
C. Zusammenführen der ersten Deckfolienbahn (40a) über die erste peelbare Kunststoffschicht (28a) mit der bedruckten Seite einer ersten Verpackungsfolienbahn (42a) unter Bildung einer lösbaren (peelbaren) Verbindung,
D. Ein- oder beidseitiges Bedrucken einer zweiten Deckfolienbahn (40b),
E. Beschichten einer Seite der zweiten Deckfolienbahn (40b) mit einer zweiten peelbaren Kunststoffschicht (28b),
F. Zusammenführen der zweiten Deckfolienbahn (40b) über die zweite peelbare Kunststoffschicht (28b) mit der bedruckten Seite einer zweiten Verpackungsfolienbahn (42b) unter Bildung einer lösbaren (peelbaren) Verbindung,
G. Zusammenführen der mit der ersten Deckfolienbahn (40a) verbundenen ersten Verpackungsfolienbahn (42a) mit der mit der zweiten Deckfolienbahn (40b) verbundenen zweiten Verpackungsfolienbahn (42b),
H. Verbinden der ersten Verpackungsfolienbahn (42a) mit der zweiten Verpackungsfolienbahn (42b) längs umlaufender Ränder (18).

7. Verfahren zur Herstellung von Verpackungsbeuteln (10) mit einer Vorderwand (12) und einer Rückwand (14) aus einer Verpackungsfolie (16), wobei die Vorderwand (12) und die Rückwand (14) längs eines umlaufenden Randes (18) miteinander verbunden sind, die Vorderwand (12) und/oder die Rückwand (14) auf der Beutelaussenseite bedruckt und auf der Beutelaussenseite mit einer ein- oder beidseitig bedruckten, im wesentlichen mit ihrer gesamten Fläche an der Vorderwand (12) bzw. Rückwand (14) haftenden und von dieser lösbaren (peelbaren) Deckfolie (20) verbunden ist, welches Verfahren die folgenden Schritte aufweist:
A. Ein- oder beidseitiges Bedrucken einer Deckfolienbahn (40),
B. Beschichten einer Seite der Deckfolienbahn (40) mit einer peelbaren Kunststoffschicht (28),
C. Zusammenführen der Deckfolienbahn (40) über die peelbare Kunststoffschicht (28) mit der bedruckten Seite einer Verpackungsfolienbahn (42) unter Bildung einer lösbaren (peelbaren) Verbindung,
D. Falten der mit der Deckfolienbahn (40) verbundenen Verpackungsfolienbahn (42) in Bahnlaufrichtung,
E. Verbinden der gefalteten Verpackungsfolienbahn (42) mit sich selbst längs umlaufender Ränder (18).

8. Verfahren nach einem der Ansprüche 5 bis 7, **dadurch gekennzeichnet, dass** die Deckfolienbahn (40, 40a,b) auf der mit der peelbaren Kunststoffschicht (28, 28a,b) beschichteten Seite zusätzlich mit einem Muster aus einem Permanentklebstoff (24, 24a,b) derart beschichtet wird, dass der Permanentklebstoff in einem Randbereich der Beutel angeordnet ist.

9. Verfahren nach Anspruch 8, **dadurch gekennzeichnet, dass** das Bedrucken der Deckfolienbahnen (40, 40a,b) und der Verpackungsfolienbahnen (42, 42a,b) und das Beschichten der Muster (24, 24a,b) aus einem Permanentklebstoff im Registerdruckverfahren durchgeführt wird.
